(19) **Europäisches Patentamt**

**European Patent Office**

**Office européen des brevets**

(11) Veröffentlichungsnummer: **0 268 551 B1**

## (12) EUROPÄISCHE PATENTSCHRIFT

(45) Veröffentlichungstag der Patentschrift: **22.07.92**

(21) Anmeldenummer: **87810564.2**

(22) Anmeldetag: **29.09.87**

Die Akte enthält technische Angaben, die nach dem Eingang der Anmeldung eingereicht wurden und die nicht in dieser Patentschrift enthalten sind.

(51) Int. Cl.⁵: **B01D 33/00**, B01D 29/46

(54) **Mechanischer Feststoffabscheider für Abwasser und Schlamm.**

(30) Priorität: **06.10.86 CH 3963/86**

(43) Veröffentlichungstag der Anmeldung:
**25.05.88 Patentblatt 88/21**

(45) Bekanntmachung des Hinweises auf die Patenterteilung:
**22.07.92 Patentblatt 92/30**

(84) Benannte Vertragsstaaten:
**AT BE CH DE ES FR GB GR IT LI NL SE**

(56) Entgegenhaltungen:
**DE-B- 1 208 261**
**GB-A- 2 070 955**
**US-A- 2 211 565**
**US-A- 4 153 557**
**US-A- 4 303 508**

(73) Patentinhaber: **Gut, Ueli Fritz**
**Jakobstrasse 4**
**CH-8400 Winterthur(CH)**

(72) Erfinder: **Gut, Ueli Fritz**
**Jakobstrasse 4**
**CH-8400 Winterthur(CH)**

(74) Vertreter: **Feldmann, Clarence Paul et al**
**c/o Patentanwaltsbüro FELDMANN AG Postfach Kanalstrasse 17**
**CH-8152 Glattbrugg(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft einen mechanischen Feststoffabscheider für die mechanische Reinigung von Rohabwasser und Schlamm mit einer Vielzahl von in Durchströmungsrichtung angeordneten, parallelen Lamellen, die mit zwischen den Lamellen hineingreifenden Abstreifern zusammenwirken, wobei die Mitnehmerlamellen drehfest zentrisch auf einer angetriebenen Welle befestigt sind.

Die mechanische Feststoffabscheidung erfolgt überall wo Rohabwasser und Schlamm anfällt auf verschiedenste Arten. Zwei Grundtypen können dabei unterschieden werden, nämlich rechenartige und siebartige Systeme.

Die älteren Abwasserreinigungsanlagen haben vorzugsweise feste Rechen, die mit einem periodisch arbeitenden, beweglichen Rechen zusammenarbeiten. Diese Rechen sind jedoch nur sinnvoll anwendbar mit einem relativ grossen Abstand der festen Rechenstäbe. Heute geht man jedoch zu immer feineren Feststoffabscheidern über. Die anfallende Menge von Feststoffen wird dabei jedoch so gross, dass eine kontinuierliche Rechenreinigung erforderlich ist. Dabei wird aber viel Material dem Abwasser bzw. dem Primärschlamm entzogen, das biologisch abbaubar wäre. Dieses Material kommt somit nicht in die Schlammfaulung und leistet keinen Beitrag zur Biogasgewinnung. Die optimale Lichtweite zwischen den Rechenstäben wäre etwa zwischen einigen Millimetern bis zu circa 1cm. Für diesen Bereich sind jedoch nur wenige Feststoffabscheider geeignet.

Bekannt sind Siebtrommeln, die jedoch ein relativ aufwendiges Reinigungssystem mit Abstreifern oder Bürsten und Spritzdüsen zur Reinigung der Durchgangsöffnungen benötigen. Die Siebtrommeln können sowohl vertikal oder horizontal rotierend angeordnet sein, wobei die Feststoffausscheidung entweder aussen oder innen an der Siebtrommel erfolgt.

Für die oben genannte, optimale Lichtweite eignen sich besonders Feststoffabscheider mit einer Vielzahl von parallelen Lamellen, die in der Durchströmungsrichtung angeordnet sind. Bekannt sind insbesondere zwei Systeme. Ein System arbeitet mit einer Vielzahl von viereckigen Lamellen, die jeweils zu einem Paket zusammengefasst sind. Die verschiedenen Pakete sind treppenförmig übereinander angeordnet, wobei die Lamellen benachbarter Pakete ineinandergreifen. Jedes zweite Lamellenpaket ist drehbar gelagert und über ein Schneckengetriebe mittels Elektromotor angetrieben. Die sich auf den rotierenden Lamellen ablagernden Feststoffe werden durch die Drehbewegung nach oben transportiert und auf das nächste, feststehende Lamellenpaket abgestreift, von dem sie wiederum vom nächsthöheren, drehenden Lamellenpaket aufgenommen und nach oben transportiert werden.

Das zweite bekannte System arbeitet ebenfalls mit einer Vielzahl von Lamellen, die zu Paketen zusammengefasst sind, wobei die einzelnen Pakete zu einer geschlossenen Kette zusammengehängt sind. Die Lamellen sind zweiteilig, und über ein Gelenk sind die beiden Teile miteinander verbunden. An der oberen Umlenkstelle der Kette werden die Lamellen so relativ zueinander geschwenkt, so dass sich das Material am vorderen Lamellenteil mit dem rechenförmigen Zahn sich zwischen zwei benachbarten rückwärtigen Lamellenteilen abstreift.

Beide Systeme sind funktionell zufriedenstellend, weisen jedoch nicht unwesentliche Nachteile auf. Beide beschriebenen Systeme haben einen diskontinuierlichen, frei durchströmbaren Durchgang. Im erstbeschriebenen System durch die ständig ändernden ineinandergreifenden rechteckigen Lamellen und im zweiten System durch die Lamellenkette, die im Gliederbereich nicht durchströmbare Bereiche aufweist.

Ferner haben beide Systeme eine grosse Anzahl von beweglichen Teilen, die einen erhöhten Unterhalt benötigen und vermehrt zu Defekten führen. Und schliesslich ist noch zu vermerken, dass beide bekannten Systeme eine sehr hohe Anzahl relativ komplexer Lamellen aufweisen und daher ausgesprochen kostspielig sind.

Ein Feststoffabscheider der eingangs genannten Art ist aus der US-A-2'211'565 bekannt. Die auf einer getriebenen Welle zentrisch gelagerten Mitnehmerlamellen kämmen hier mit Abstreiflamellen auf einer zweiten versetzten, gleichlaufenden getriebenen Welle. Erfahrungsgemäss lagern sich auch Feststoffe auf der Welle zwischen den Mitnehmerlamellen ab und verdichten sich mit der Zeit. Der freie Durchfluss zwischen den Mitnehmerlamellen unterhalb der Welle kommt so langsam zum Erliegen. Denselben Effekt hat man auch auf der zweiten Welle und zwischen den Abstreiflamellen.

Die US-A-4'303'508 zeigt ein Trommelsieb, welches besonders zur Austragung von Klumpen, Faserbündeln und dergleichen aus einer Zellulose-Suspension. Die Trommel besteht aus einer Vielzahl paralleler Ringe, die mit einem feststehenden Kamm aus einzelnen, feststehenden Rückhaltegliedern kämmen. Für die Austragung von gröberen Feststoffen ist ein solches Gerät ungeeignet, da keine Förderung im Bereich des feststehenden Kammes erfolgt, bauen sich die Feststoffe auf, bis schliesslich ein Rückstau auf der Einlassseite erfolgt und Flüssigkeit und Feststoffe über die Trommel hinweg gespült werden.

Aehnlich im Aufbau ist ein rotierender Rechen gemäss der GB-A-2'070'955, der mit einem feststehenden von aussen in den Rechen eingreifenden Kamm zusammenwirkt. Der rotierende Rechen der wiederum aus vielen parallelen Ringen besteht, ist nur geeignet oben schwimmende Feststoffe abzuscheiden, während die schweren Feststoffe unterhalb der Welle vom Wasserdruck angepresst werden und zu einer Verstopfung führen. Verunreinigungen, die durch die Zwischenräume der Ringe in die Trommel gelangen, können sich dort wiederum wie bei den vorgenannten Ausführungen ungehindert um die Welle aufbauen, ohne dass eine Möglichkeit der Reinigung besteht.

Die vorliegende Erfindung hat daher die Aufgabe, einen mechanischen Feststoffabscheider für die mechanische Reinigung von Rohabwasser und Frischschlamm mit einer Vielzahl von in Durchströmungsrichtung angeordneten, parallelen Lamellen zu schaffen, die mit zwischen den Lamellen hineingreifenden Abstreifern zusammenwirken, und bei den die vorgenannten Schwierigkeiten vermieden werden und welcher ausserordentlich preisgünstig ist.

Diese Aufgabe löst ein Feststoffabscheider der eingangs genannten Art, mit demn Merkmalen des Patentanspruches 1.

Ein solcher Abscheider kann beispielsweise direkt in einem Kanal einer Abwasserreinigungsanlage eingebaut werden, wobei das so gereinigte Wasser unten weiterfliessen kann, während die Feststoffe nach oben weggefördert werden können.

Durch die besondere Form der Mitnehmerlamellen läßt sich ein einwandfreies und problemloses Abstreifen ohne Beschädigung der Lamellen und Verklemmen von Feststoffteilen zwischen denselben erreichen.

Der Feststoffabscheider wird von den örtlichen Gegebenheiten der Anlage, in welcher er sie angeordnet werden kann, vollständig unabhängig, wenn die Welle mit den Lamellen horizontal in einem länglichen Trog gelagert ist, wobei im Trogboden in Durchlaufsrichtung vor der lamellentragenden Welle ein Einlauf und hinter der Welle ein Ablauf angeordnet ist, und dass zwischen dem Ablauf und der in Strömungsrichtung hinteren Wand eine abdichtende Zwischenwand angeordnet ist, die bis zum Bereich hochgezogen ist, in dem Abstreiflamellen untereinander fest verbunden sind, wobei der so abgetrennte Raum mit einer Ableitung für die abgeschiedenen Feststoffe versehen ist.

Weitere vorteilhafte Ausgestaltungsformen des erfindungsgemässen Feststoffabscheiders ergeben sich aus den weiteren, abhängigen Ansprüchen und sind in der nachfolgenden Beschreibung anhand der anliegenden Zeichnungen erläutert. Es zeigt:

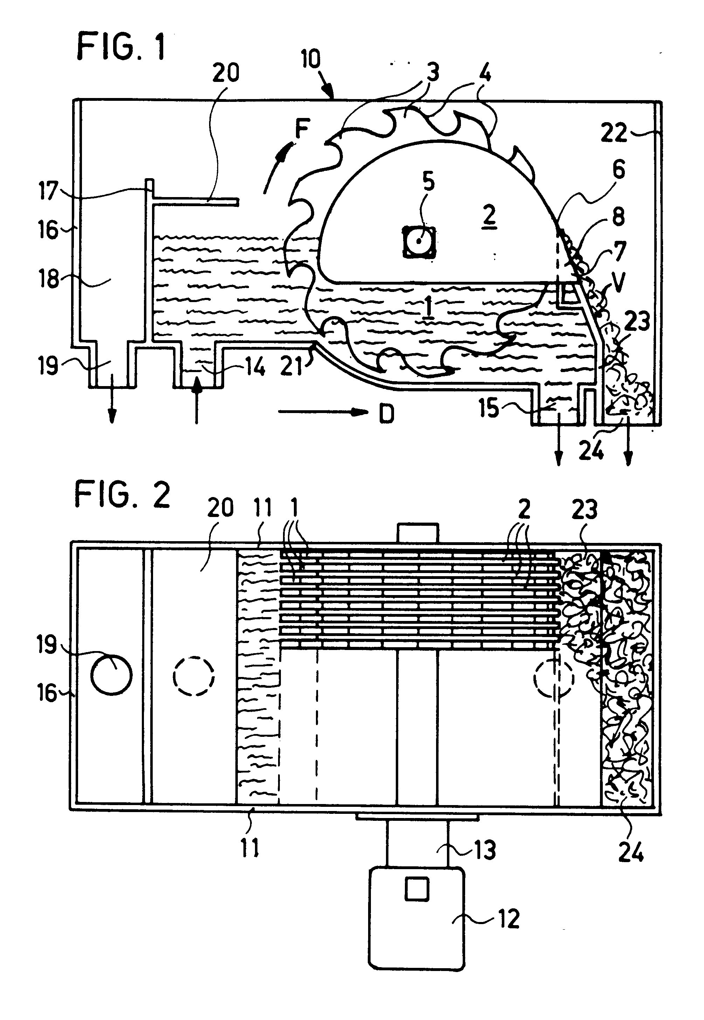

Figur 1      eine schematische Darstellung eines Ausführungsbeispieles des erfindungsgemässen Feststoffabscheiders;

Figur 2      in Ansicht von oben.

Figur 3      zeigt ebenfalls schematisch die Anordnung eines solchen Feststoffabscheiders in einer teilweise dargestellten Abwasserreinigungsanlage;

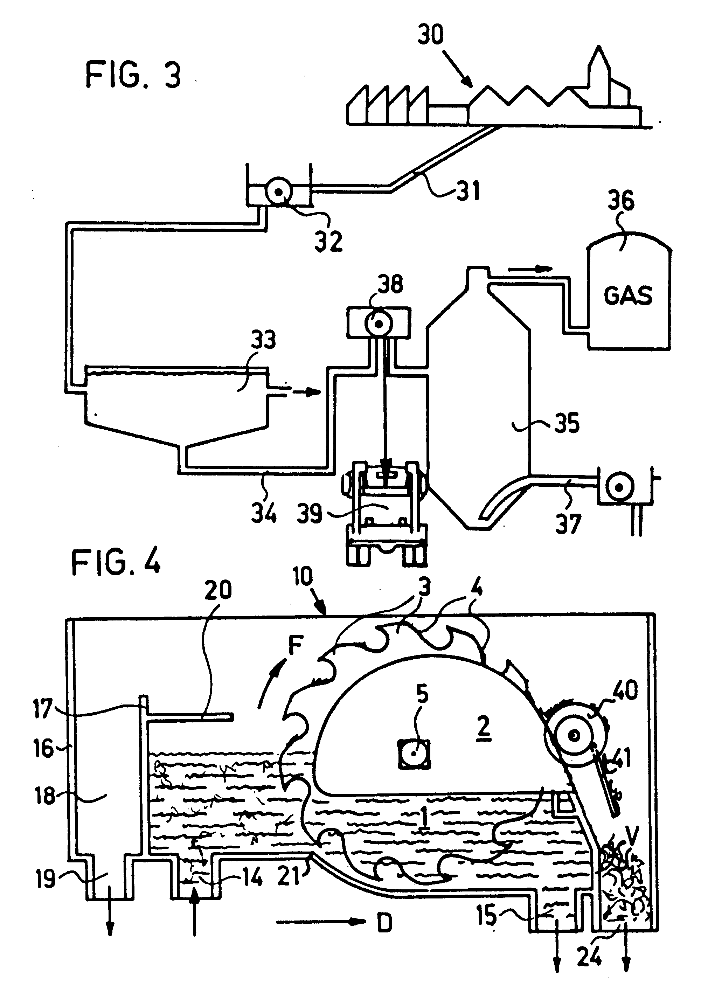

Figur 4      eine Variante des Feststoffabscheiders nach Figur Der erfindungsgemässe Feststoffabscheider besteht aus einer Vielzahl von in Durchströmungsrichtung D angeordneten, parallelen Lamellen, die mit zwischen den Lamellen hineinragenden Abstreifern zusammenwirken. In der erfindungsgemässen Ausführung sind zwei Lamellentypen angewendet. Der eine Lamellentyp ist eine Mitnehmerlamelle 1 und der zweite Typ ist eine Abstreiflamelle 2. Die Mitnehmerlamellen 1 haben die Form von runden, gezahnten Kreissägeblättern. Die Zähne 3 verlaufen bezüglich der Drehrichtung F nach hinten gebogen, so dass die abzuscheidenden Feststoffe auf der konvex geformten Flanke 4 anliegen. Die Abstreiferlamellen 2 gleichen einem Halbkreis.

Beide Lamellenarten sind auf einer Welle 5 montiert. Die Mitnehmerlamellen 1 sind auf der Welle 5 fest angeordnet und drehen sich mit der Frequenz der Welle 5. Die Abstreiflamellen 2 stehen still und sind somit auf der Welle 5 gleitend gelagert. Die Mitnehmerlamellen 1 sind zentrisch, die Abstreiflamellen exzentrisch auf der Welle 5 montiert. Bezüglich der Durchströmungsrichtung D ragen die Mitnehmerlamellen auf der Einströmseite über die Abstreiflamellen 1 hinaus. Hingegen ragen die Abstreiflamellen 2 auf der Abflussseite über die Mitnehmerlamellen hinaus. Dadurch haben sämtliche Lamellen etwas oberhalb der Höhe der Welle 5 eine gemeinsame Tangentenlinie 6. Im Bereich dieser gemeinsamen Tangentenlinie 6 werden die Feststoffe, die bereits durch die Abstreiflamellen 2 von den Mitnehmerlamellen zu dieser Linie gefördert wurden abgenommen. Dies kann auf verschiedenste, bekannte Arten erfolgen. Gemäss der dargestellten Lösung geschieht dies durch ein Rakel 7, über welches die Verunreinigungen V in ein Auffangbehältnis 39 rutschen oder aktiv dorthin gefördert werden.

Statt mittels des Rakels können die Verunreinigungen V auch durch eine Kammwalze, welche zwischen die Lamellen hineinragt, hinausgefördert werden. Die Kammwalze muss dazu gegenläufig zu den Mitnehmerlamellen 1 getrieben werden. Vorzugsweise sollte die Kammwalze mit einer höheren Umfangsgeschwindigkeit als die Mitnehmerlamellen getrieben werden. Die Kammwalze 40 gemäss Figur 4 ist zwischen den beiden parallelen Seitenwänden 11 gelagert und mittels geeigneten Transmissionsmittel vom Antriebsmotor 12 getrieben. Die Kammwalze 40 kann aus einer Vielzahl von Scheiben gebildet werden, die in ihrer Dicke der Dicke der Lamellen 1 und 2 entsprechen und unterschiedliche Durchmesser aufweisen. Die Verunreinigungen V werden von einem Rakel 41 abgenommen. Schliesslich käme auch noch eine Lösung mit einer Borstenwalze in Frage, die gleich wie die Kammwalze angetrieben sein sollte.

Die Abstreiflamellen sind ausserhalb des gemeinsamen Ueberlappungsbereiches miteinander verbunden. Dies erfolgt mittels etwa dreieckigen Zwischenstücken 8, die in jenem Bereich zwischen die Abstreiflamellen 2 eingeschoben sind. Das so geformte Lamellenpaket liegt auf einem Querträger auf.

Sämtliche Lamellen lassen sich auf einer Achse montieren, die gesamthaft auf die Welle 5 aufgeschoben werden kann, so dass sich dass ganze Lamellenpaket schnell auswechseln lässt. Dies kann für gelegentliche Revisionen wie auch für die Aenderung der Lichtweite zwischen zwei Mitnehmerlamellen vorteilhaft sein. Die Lichtweite ergibt sich logischerweise durch die Dicke der Lamellen.

Diese prinzipielle Anordnung kann an verschiedenen Orten überall wo Rohabwasser und Schlamm anfällt Abwasserreinigungsanlagen angeordnet werden und so auch als Rechen dienen. Nachfolgend wird nun eine spezielle Ausführung beschrieben, bei der die prinzipielle Anordnung in einem speziellen Behältnis untergebracht ist, so dass der Festkörperabscheider fast unabhängig von den örtlichen Gegebenheiten beliebig aufgestellt werden kann. Hierzu ist die Welle 5 mit den Lamellen 1,2 in einem rechtwinkligen Trog 10 zwischen zwei parallelen Seitenwänden 11 gelagert. An einer Wand 11 ist der Antriebsmotor 12 mit einem Zwischengetriebe 13 angeflanscht.

In der Durchströmungsrichtung D vor der lamellentragenden Welle 5 ist im Trogboden ein Einlauf 14 und nach der lamellentragenden Welle 5 ein Ablauf 15 angebracht. Zwischen dem Einlauf 14 und der Vorderwand 16 ist eine Zwischenwand 17 eingeschweisst. Der zwischen den Wänden 16 und 17 verbleibende Raum 18 ist mit einer Ueberlaufrückleitung 19 verbunden. Diese Rückleitung 19 ist wieder mit der Zuleitung zum Einlauf 14 verbunden. Am oberen Ende der Zwischenwand 17 ist ein in Richtung zur lamellentragenden Welle 5 gerichtetes, sich über den Einlauf 14 erstreckendes, horizontales Spritzblech 20 angebracht.

Der Trogboden weist vom Einlauf 14 zum Ablauf 15 hin ein Gefälle auf. In der dargestellten Ausführung ist dieses Gefälle durch eine Zwischenstufe 21 realisiert, die formlich dem Umfang der Mitnehmerlamellen 1 angepasst ist. Zwischen dem Trogboden und der Unterkante der Abstreiflamellen 2 verbleibt somit ein ständig gleichbleibender Durchlass entsprechend der Summe aller Zwischenräume zwischen den Mitnehmerlamellen 1.

Zwischen dem Ablauf 15 und der Rückwand 22 ist nochmals eine Trennwand 23 zwischen den Seitenwänden 11 eingeschweisst, die sich vom Rakel 7 bis unterhalb dem Trogboden erstreckt. Die abgerakelten Feststoffe und Verunreinigungen V gelangen so zu einer Ableitung 24.

In der Figur 3 ist ein Teil einer Abwasserreinigungsanlage dargestellt, um zwei Beispiele der möglichen Anordnung des erfindungsgemässen Feststoffabscheiders aufzuzeigen. Mit 30 ist eine schematisch dargestellte Kommune bezeichnet, von der ein Kanalnetz 31 in die Abwasserreinigung führt. Dort kann vor der Zuleitung zum Vorklärbecken 33 der Feststoffabscheider 32 schon in der Funktion eines herkömmlichen Rechens eingesetzt werden. Vom Vorklärbecken 33 kommt der dort anfallende Frischschlamm über eine Druckleitung 34 zum Faulturm 35. Das bei der Schlammfaulung anfallende Gas wird in den Gasometer 36 geleitet. Der anfallende Klärschlamm wird über die Ableitung 37 zu einer nicht dargestellten Aufbereitungsanlage mit Trockner geführt.

Zur weiteren Ausscheidung von Feststoffen kann in der Druckleitung 34 oben am Faulturm nochmals ein Feststoffabscheider 38 in einem trogartigen Behälter angebracht sein, um den zugeleiteten Primärschlamm zu reinigen. Die anfallenden Verunreinigungen fallen von dort direkt in einen Auffangbehälter 39, beispielsweise in eine Lastwagenmulde, und können in eine Deponie abtransportiert werden.

Schliesslich sei nochmals auf die ungewohnte Zahnstellung der Mitnehmerlamellen 1 eingegangen. Diese anscheinend paradoxe Form wirkt deshalb, weil das durchströmende Abwasser oder Schlamm die Feststoffe auf die konvexen Flanken 4 der Zähne 3 drückt. Es ist jedoch einleuchtend, dass die seltsame Zahnform das Abstreifen der Verunreinigungen V erleichtert.

Die Gestaltung der Antriebswelle 5 kann am einfachsten so erfolgen, dass auf der eigentlichen Welle ein Vierkantrohr aufgeschoben ist, das mittels einem Splint oder einem Kiel formschlüssig mit der Welle verbunden ist. Die Mitnehmerlamellen 1 sitzen direkt auf dem Vierkantrohr, während die Abstreiflamellen 2 auf Gleitlager lagern, die auf das Vierkantrohr aufgeschoben sind. Zum Ausbau lässt sich somit, die Welle 5 aus dem Vierkantrohr herausziehen, worauf das ganze Lamellen Paket herausnehmbar ist.

**Patentansprüche**

1. Mechanischer Feststoffabscheider für die mechanische Reinigung von Rohabwasser und Schlamm mit einer Vielzahl von in Durchströmungsrichtung angeordneten, parallelen Mitnehmerlamellen (1), die mit zwischen die Lamellen hineingreifenden Abstreiflamellen (2) zusammenwirken, wobei die Mitnehmerlamellen (2) drehfest zentrisch auf einer angetriebenen Welle (5) befestigt sind, dadurch gekennzeichnet, dass auf der getriebenen, horizontalen Welle (5) die Mitnehmerlamellen (1) und Abstreiflamellen (2) in wechselnder Folge aufgereiht sind, wobei die Abstreiflamellen (2) stillstehen und gleitend auf der Welle (5) gelagert sind, dass die drehfest und zentrisch auf der Welle gelagerten Mitnehmerlamellen (1) die Form von gezahnten Kreissägeblättern aufweisen, und dass die Abstreiflamellen (2), die einem Halbkreis gleichen und unterhalb der Antriebswelle (5) einen freien Durchfluss zwischen den Mitnehmerlamellen freilassen, exzentrisch so auf der Welle (5) angeordnet sind, dass die bezüglich der Drehrichtung nach hinten geneigt verlaufenden Zähne (3) der Mitnehmerlamellen (1) auf der Zustromseite über die Abstreiflamellen (2) hinausragen während auf der Abflußseite die Abstreiflamellen (2) über die Zähne (3) der Mitnehmerlamellen (1) hinausragen.

2. Feststoffabscheider nach Anspruch 1 , dadurch gekennzeichnet, dass die Abstreiflamellen (2) ausserhalb des Ueberschnittbereiches mit den Mitnehmerlamellen untereinander (8) fest verbunden sind.

3. Feststoffabscheider nach Anspruch 1 , dadurch gekennzeichnet, dass an den Abstreiflamellen (2) direkt oder mittelbar ein Abstreifer (7) angebracht ist, welches sich von der oberen gemeinsamen Tangentenlinie (6) aller Lamellen nach unten erstreckt.

4. Feststoffabscheider nach Anspruch 1 , dadurch gekennzeichnet, dass im Bereich der gemeinsamen Tangentenlinie (6) aller Lamellen eine getriebene Kammwalze angeordnet ist.

5. Feststoffabscheider nach Anspruch 2, dadurch gekennzeichnet, dass die Welle (5) mit den Lamellen (2,3) horizontal in einem länglichen Trog (10) gelagert ist, wobei in Durchlaufsrichtung vor der lamellentragenden Welle (5) ein Einlauf (14) und hinter der Welle ein Ablauf (15) angeordnet ist, und dass zwischen dem Ablauf und der in Strömungsrichtung hinteren Wand (22) eine abdichtende Zwischenwand (23) angeordnet ist, die bis zum Bereich (8) hochgezogen ist, in dem die Abstreiflamellen untereinander fest verbunden sind, wobei der so abgetrennte Raum mit einer Ableitung (24) für die abgeschiedenen Feststoffe (V) versehen ist.

6. Feststoffabscheider nach Anspruch 5, dadurch gekennzeichnet, dass zwischen dem Einlauf (14) und der in Strömungsrichtung vorderen Wand (16) des Troges (10) eine dichte, zweite Zwischenwand (17) angeordnet ist, die bis knapp unterhalb des obersten Punktes der Einkerbungen in den gezahnten Lamellen reicht und einen Ueberlauf in den durch die zweite Zwischenwand (17) und die vordere Trogwand (16) gebildeten Raum (18) ermöglicht, welcher Raum (18) mit einer Rückleitung (19) in die Zuleitung des Feststoffabscheiders gekoppelt ist.

7. Feststoffabscheider nach Anspruch 6, dadurch gekennzeichnet, dass an der zweiten Zwischenwand (17) ein etwa horizontal verlaufendes Spritzblech (20) vorgesehen ist, welches sich über den Einlauf (14) erstreckt, der im Trogboden angeordnet ist.

8. Feststoffabscheider nach Anspruch 5, dadurch gekennzeichnet, dass der Trogboden vom Einlauf (14) zum Auslauf (15) hin geneigt ist, und dass die Spaltbreite zwischen den rotierenden, gezahnten Lamellen (1) und dem Trogboden höchstens dem Abstand zweier gezahnter Lamellen entspricht.

9. Feststoffabscheider nach Anspruch 5 in der Verwendung in einer Abwasserkläranlage mit mindestens einem ersten Vorklärbecken (33) und mindestens einem Faulturm (35), dadurch gekennzeichnet, dass der Feststoffabscheider (38) vor dem oberen Einlass des Faulturms (35) in der Zuleitung des Frischschlamms vom Klärbecken (33) angeordnet ist und die Ableitung für die Feststoffe zu einem neben den Faulturm angeordneten Auffangbehälter (39) führt.

10. Feststoffabscheider nach Anspruch 1, dadurch gekennzeichnet, dass die Lamellen (1,2) mittelbar auf der Welle (5) lagern, wobei die Welle (5) in einem drehfest mit ihr verbundenen Vierkantrohr liegt, auf dem die Mitnehmerlamellen (1) direkt, formschlüssig aufgeschoben sind und die Abstreiflamellen mittelbar, gleitend gelagert sind.

**Claims**

1. Mechanical solids separator for the mechanical cleaning or purification of raw sewage and sludge with a plurality of parallel driving laminas (1) arranged in the flow direction and which cooperate with stripping laminas (2) engaging between said laminas (1), the driving laminas (1) being fixed in non-rotary, central manner on a driven shaft (5), characterized in that the driving laminas (1) and the stripping laminas (2) are arranged in an alternating order on the driven, horizontal shaft (5), the stripping laminas (2) being stationary and mounted so as to slide on the shaft (5), that the driving laminas (1) mounted in non-rotary, central manner on the shaft are in the form of toothed circular saw blades and that the stripping laminas (2), which equal a semicircle and below the driving shaft (5) leave a free passage between the driving laminas, are so eccentrically arranged on the shaft (5) that the teeth (3) of the driving laminas (1) rearwardly inclined with respect to the rotation direction, on the inflow side project over the stripping laminas (2), whereas on the outflow side the stripping laminas (2) project over the teeth (3) of the driving laminas (1).

2. Solids separator according to claim 1, characterized in that the stripping laminas (2) are firmly interconnected (8) outside the intersection area with the driving laminas.

3. Solids separator according to claim 1, characterized in that a stripper (7) is directly or indirectly fitted to the stripping laminas (2) and extends downwards from the upper, common tangent line (6) of all the laminas.

4. Solids separator according to claim 1, characterized in that in the vicinity of the common tangent line (6) of all the laminas is provided a driven pinion.

5. Solids separator according to claim 2, characterized in that the shaft (5) with the laminas (2,3) is horizontally mounted in an elongated trough (10) and in the passage direction upstream of the lamina-carrying shaft (5) is provided an inlet (14), whilst an outlet (15) is provided downstream of the shaft and that between the outlet and the rear wall (22) in the flow direction is provided a sealing partition (23), which is raised up to the area (8), in which the stripping laminas are firmly interconnected, the thus separated area being provided with a drain (24) for the separated solids (V).

6. Solids separator according to claim 5, characterized in that between the inlet (14) and the front wall (16) of the trough (10) in the flow direction is provided a tight, second partition (17), which extends to just below the top point of the notches in the toothed laminas and permits an overflow into the chamber (18) formed by the second partition (17) and the front trough wall (16), said chamber (18) being linked by a return line (19) with the solids separator feed line.

7. Solids separator according to claim 6, characterized in that on the second partition (17) is provided a roughly horizontally directed splash-board (20), which extends over the inlet (14) placed in the bottom of the trough.

8. Solids separator according to claim 5, characterized in that the bottom of the trough is inclined from the inlet (14) to the outlet (15) and that the gap width between the rotating, toothed laminas (1) and the bottom of the trough at the most corresponds to the distance between two toothed laminas.

9. Solids separator according to claim 5 when used in a sewage treatment plant with at least one first preclarification tank (33) and at least one digestion tower (35), characterized in that the solids separator (38) is positioned upstream of the upper inlet of the digestion tower (35) in the crude sludge feed line from the preclarification tank (33) and the drain for the solids leads to a collecting vessel (39) positioned alongside the digestion tower.

10. Solids separator according to claim 1, characterized in that the laminas (1,2) are indirectly mounted on the shaft (5), which is located in a square pipe connected in non-rotary manner thereto and onto which the driving laminas (1) are directly engaged in interlocking manner and the stripping laminas are indirectly mounted in sliding manner.

**Revendications**

1. Séparateur mécanique de particules solides pour l'épuration mécanique d'eaux d'égout brutes et de boues, comprenant une multiplicité de disques entraîneurs parallèles (1) qui sont disposés dans la direction d'écoulement et coopèrent avec des disques racleurs (2) s'engageant entre les disques entraîneurs, les disques entraîneurs (1) étant fixés de manière centrée et en solidarité de rotation sur un arbre entraîné (5), **caractérisé** en ce que les disques entraîneurs (1) et les disques racleurs (2) se succèdent alternativement en enfilade sur l'arbre entraîné horizontal (5), les disques racleurs (2) étant immobiles et montés en coulissement sur l'arbre (5), en ce que les disques entraîneurs (1), montés en solidarité de rotation et de manière centrée sur l'arbre (5), présentent la forme de lames dentées de scie circulaire, et en ce que les disques racleurs (2), qui ont la forme d'un demi-cercle et laissent un libre passage entre les disques entraîneurs en dessous de l'arbre d'entraînement (5), sont disposés excentriquement sur l'arbre (5) de telle sorte que les dents (3) des disques entraîneurs (1), s'étendant en inclinaison vers l'arrière par rapport à la direction de rotation, dépassent des disques racleurs (2) du côté du flux entrant, tandis que du côté du flux sortant, les disques racleurs (2) dépassent des dents (3) des disques entraîneurs (1).

2. Séparateur de particules solides selon la revendication 1, caractérisé en ce que les disques racleurs (2) sont assemblés fixement les uns aux autres (en 8) en dehors de la région de chevauchement avec les disques entraîneurs.

3. Séparateur de particules solides selon la revendication 1, caractérisé en ce qu'au moins un racle (7) est fixé directement ou indirectement sur les disques racleurs (2) et s'étend vers le bas à partir de la tangente supérieure (6) commune à tous les disques.

4. Séparateur de particules solides selon la revendication 1, caractérisé en ce qu'un cylindre à peignes entraîné est disposé dans la région de la tangente (6) commune à tous les disques.

5. Séparateur de particules solides selon la revendication 2, caractérisé en ce que l'arbre (5) pourvu des disques (1,2) est monté horizontalement dans un bac oblong (10), une admission (14) étant disposé avant l'arbre (5) porteur de disques et une évacuation (15) après cet arbre dans la direction d'écoulement, et en ce qu'une paroi intermédiaire hermétique (23) est disposée entre l'évacuation et la paroi (22), arrière dans la direction d'écoulement, et est dressée jusqu'à la région (8) dans laquelle les disques racleurs sont assemblés fixement les uns aux autres, la chambre ainsi séparée étant pourvue d'une conduite d'évacuation (24) pour les particules solides séparées (V).

6. Séparateur de particules solides selon la revendication 5, caractérisé en ce qu'une seconde paroi intermédiaire hermétique (17) est disposée entre l'admission (14) et la paroi (16), avant dans la direction d'écoulement, du bac (10), et elle s'étend jusque peu en dessous du point supérieur des encoches des disques dentés et permet un débordement dans la chambre (18) formée par la seconde paroi intermédiaire (17) et la paroi avant (16) du bac, cette chambre (18) étant reliée par une conduite de retour (19) à la conduite d'alimentation du séparateur de particules solides.

7. Séparateur de particules solides selon la revendication 6, caractérisé en ce qu'une tôle déflectrice (20), s'étendant approximativement horizontalement, est prévue sur la seconde paroi intermédiaire (17) et s'étend au-dessus de l'admission (14), disposée dans le fond du bac.

8. Séparateur de particules solides selon la revendication 5, caractérisé en ce que le fond du bac est en inclinaison de l'admission (14) vers l'évacuation (15), et en ce que la largeur de fente entre les disques dentés rotatifs (1) et le fond du bac correspond au plus à l'écartement de deux disques dentés.

9. Séparateur de particules solides selon la revendication 5, utilisé dans une station d'épuration des eaux usées comprenant au moins un premier bassin de décantation primaire (33) et au moins une tour de digestion des boues (35), caractérisé en ce que le séparateur de particules solides (38) est disposé avant l'admission supérieure de la tour de digestion des boues (35) dans la conduite amenant les boues fraîches en provenance du bassin de décantation primaire (33), et la conduite d'évacuation des particules solides mène à un récipient collecteur (39) disposé à côté de la tour de digestion des boues.

10. Séparateur de particules solides selon la revendication 1, caractérisé en ce que les disques (1,2) sont indirectement montés sur l'arbre (5), l'arbre (5) se trouvant dans un tube carré, qui lui est assemblé solidairement en rotation et sur lequel les disques entraîneurs (1) sont directement enfilés, en liaison positive, et les disques racleurs sont indirectement montés, en coulissement.

FIG. 1

FIG. 2

**FIG. 3**

**FIG. 4**